# EUROPÄISCHE PATENTSCHRIFT

(11) **EP 2 254 689 B1**
(45) Veröffentlichungstag und Bekanntmachung des Hinweises auf die Patenterteilung: **01.08.2012**
(21) Anmeldenummer: 09713564.4
(22) Anmeldetag: 12.02.2009
(51) Int. Cl.: B01F 15/00, B01F 15/04

(54) **VERFAHREN UND VORRICHTUNG ZUR HERSTELLUNG VON MISCHUNGEN**
METHOD AND DEVICE FOR PRODUCING MIXTURES
PROCÉDÉ ET DISPOSITIF DE PRÉPARATION DE MÉLANGES

(30) Priorität: 23.02.2008 DE 102008010751
(43) Veröffentlichungstag der Anmeldung: 01.12.2010
(73) Patentinhaber: Bayer MaterialScience AG, 51368 Leverkusen (DE)
(72) Erfinder: HAUSMANN, Heinz, 42799 Leichlingen (DE); FIETZ, Juergen, 51519 Odenthal (DE)
(86) Internationale Anmeldenummer: PCT/EP2009/000959
(87) Internationale Veröffentlichungsnummer: WO 2009/103449

(56) Entgegenhaltungen:
- WO-A1-2007/142509
- DE-A1-102005 032 448
- DE-U1-202005 020 930
- FR-A1- 2 877 746
- US-A1- 2007 012 378

## Beschreibung

Die Erfindung betrifft ein Verfahren und eine Vorrichtung zur Herstellung von Mischungen von Flüssigkeiten und/oder Feststoffen, insbesondere zur Herstellung von Polyolformulierungen zum Einsatz in der Herstellung von Polyurethanen.

In vielen Bereichen der Technik stellt sich die Aufgabe, Mischungen verschiedener Flüssigkeiten und/oder Feststoffe nach variablen Rezepturen industriell herzustellen, z.B. in der Lebensmittelindustrie, der pharmazeutischen Industrie, der petrochemischen Industrie, bei der Herstellung von Farben und Lacken oder Kunststoffmischungen. Einer dieser Bereiche ist die Herstellung von Polyolformulierungen zum Einsatz in der Herstellung von Polyurethanen. Hierbei müssen aus einer Vielzahl von Basiskomponenten (Polyole, Treibmittel, Stabilisatoren, Aktivatoren, Zuschlagstoffe etc.) die verschiedensten Mischungen hergestellt werden, wofür wiederum Hunderte unterschiedlicher Rezepturen existieren. Es besteht daher ein Bedarf für Vorrichtungen und Verfahren, mit denen sich Mischungen einfach und effektiv herstellen lassen.

Traditionell wurden zur Herstellung einer Mischung nach einer vorgegebenen Rezeptur die entsprechenden Mengen der Einzelkomponenten manuell aus Vorratsbehältern entnommen und vermischt. Dies ist naturgemäß mit großem Zeit- und Arbeitsaufwand verbunden. Daher wurden verschiedene Maßnahmen entwickelt, um das Verfahren effektiver zu gestalten. Um die mit einer manuellen Entnahme und Auswaage einzelner Rezepturbestandteile aus ihren Vorratsbehältern verbundenen Nachteile wie Zeitaufwand und Messungenauigkeit zu verringern, wurden automatische Dosiereinrichtungen entwickelt, die die Entnahme einer einstellbaren Menge der jeweiligen Komponente aus dem Vorratsbehälter ermöglichen.

Eine weitere Vereinfachung stellen Vorrichtungen dar, bei denen sämtliche Vorratsbehälter über Rohrleitungen mit einem zentralen stationären Mischgefäß verbunden sind, in das über eine geeignete Steuerung die Einzelkomponenten der jeweiligen Rezeptur dosiert werden. Nachteilig an dieser Variante ist, dass bei einer größeren Anzahl von Einzelkomponenten der apparative Aufwand sehr hoch wird. Mischungen nach verschiedenen Rezepturen lassen sich nur nacheinander herstellen. Um zwei unterschiedliche Mischungen gleichzeitig herzustellen, ist einer zweite Mischvorrichtung erforderlich.

Eine Alternative ist eine Mischvorrichtung, bei der Mischbehälter auf einem Förderband an einer Reihe stationärer Lagerbehälter für die Einzelkomponenten vorbeitransportiert werden. Wenn der Mischbehälter an einem Lagerbehälter ankommt, der eine in der Rezeptur vorgesehene Komponente enthält, wird diese in den Mischbehälter dosiert. Diese Vorrichtung erlaubt es, Mischungen nach unterschiedlichen Rezepturen parallel herzustellen. Nachteilig ist jedoch, dass jeder Mischbehälter zwangsläufig sämtliche Lagerbehälter anfährt, obwohl eine Vielzahl davon keine der für die jeweilige Rezeptur benötigte Komponente enthält Der Weitertransport sämtlicher Mischbehälter kann immer erst dann erfolgen, wenn der aktuelle Dosiervorgang für alle Mischbehälter beendet ist, d.h. vor dem nächsten Schritt müssen alle auf das Ende des langsamsten Dosiervorgangs warten.

DE 10 2005 032448 A1 offenbart eine Rohrfördereinrichtung (Rohrpostanlage), wobei ein Transportbehälter (ein Mischbehälter) ausgehend von einer Sendestation zu einer ersten und ggf. weiteren Befüllstationen mittels Druckluft befördert wird. Neben dem rein sequenziellen Durchlaufen von Befüllstationen ist auch das wenigstens teilweise alternative Anfahren des Transportbehälters von Befüllstationen möglich, wozu wenigstens eine Weiche im Rohrsystem angeordnet sein muss.

DE 20 2005 020930 U1 offenbart eine Einrichtung zum Liefern unterschiedlich gefärbter Polyurethan-Ausbildungsmaterialien enthaltend jeweils eine Quelle für Polyol und Isocyanat, mehrere Quellen für Färbemittel, sowie mehrere Vormischkammem, die jeweils ein Mischelement aufweisen.

EP 1090678 A1 offenbart eine Vorrichtung zur Herstellung von Mischungen von Flüssigkeiten und/oder Feststoffen umfassend mehrere stationäre Lagerbehälter mit steuerbaren Dosiervorrichtungen, einen beweglichen Mischbehälter, und Mittel zur Steuerung der Mischbehälter und der Dosiervorrichtung der stationären Lagerbehälter.

WO 2006/036096 A1 offenbart eine Vorrichtung zum Mischen von Farben, in die einen Behälter mit den Grundfarben-Komponenten eingesetzt werden kann, und wobei Farbpigmente über ein Loch zugeführt werden kann. Das vermischen der Komponenten wird über einen Microcomputer gesteuert, der interaktiv mit dem Benutzer zusammenarbeitet.

Es wurde nun ein Verfahren gefunden, mit dem sich Mischungen noch effizienter herstellen lassen und es wurde eine zur Durchführung des Verfahrens geeignete Vorrichtung entwickelt. Im erfindungsgemäßen Verfahren werden unabhängig voneinander bewegliche Mischbehälter eingesetzt. Diese Mischbehälter sind Versandgebinde auf beweglichen Untersätzen. Die einzelnen Mischbehälter werden gemäß der Vorgabe durch eine Rezeptur zu einem von mehreren stationären Lagerbehältern für die Komponenten der jeweiligen Rezeptur bewegt. Dann wird die in der Rezeptur festgelegte Menge der jeweiligen Komponente in den jeweiligen Mischbehälter dosiert. Anschließend wird der Mischbehälter zum Lagerbehälter für die nächste durch die Rezeptur vorgegebene Komponente bewegt und dort wird die in der Rezeptur festgelegte Menge der Komponente in den Mischbehälter zudosiert. Dies wird so lange durchgeführt, bis alle in der Rezeptur aufgeführten Komponenten in den Mischbehälter dosiert sind.

Ein Vorteil des Verfahrens ist, dass parallel mehrere verschiedene Rezepturen abgearbeitet werden können. Durch die unabhängig voneinander beweglichen Mischbehälter werden Wartezeiten verringert. Benötigt beispielsweise der Dosiervorgang für einen bestimmten Mischbehälter längere Zeit, können die anderen Mischbehälter in der Zwischenzeit schon zum nächsten oder übernächsten Dosierschritt vorrücken. Mischungen, die eine geringere Anzahl von Komponenten enthalten, können schneller fertig gestellt werden, da keine feste Mischreihenfolge vorgegeben ist. Es ist jederzeit möglich, die Herstellung einer zusätzlichen Mischung nach einer weiteren Rezeptur zu starten.

Gegenstand der Erfindung ist auch eine Vorrichtung zur Herstellung von Mischungen von Flüssigkeiten und/oder Feststoffen. Die erfindungsgemäße Vorrichtung umfasst (1) mehrere stationäre Lagerbehälter mit steuerbaren Dosiervorrichtungen, (2) mehrere unabhängig voneinander zwischen den Lagerbehältern bewegliche Mischbehälter, und (3) Mittel zur Steuerung der Mischbehälter und der Dosiervorrichtungen der Lagerbehälter.

In einer bevorzugten Ausführungsform sind die Lagerbehälter mit elektromechanisch oder pneumatisch schaltbaren Dosierventilen ausgestattet, die elektronisch gesteuert werden. In einer weiteren bevorzugten Ausführungsform weisen die Lagerbehälter Mittel zur Auslösung des Dosiervorgangs auf

Die Mischbehälter sind Versandgebinde (beispielsweise Hobbocks, Fässer oder Einwegcontainer (EWC)) auf beweglichen Untersätzen. In einer besonders bevorzugten Ausführungsform sind in die Untersätze Vorrichtungen zur Gewichtsmessung integriert.

In einer bevorzugten Ausführungsform der Erfindung erfolgt die Steuerung der Dosiervorrichtungen der Lagerbehälter und der Mischbehälter durch einen zentralen Computer, wobei die Steuerung besonders bevorzugt drahtlos erfolgt, z.B. über WLAN.

Optional wird die durch Verwendung der erfindungssemäßen Vorrichtung hergestellte Mischung homogenisiert (z.B. durch Rührer, statische Mischer, Taumelmischanlagen etc.), wobei die Homogenisierung nach Zugabe aller Komponenten oder jeweils nach Zugabe einer Komponente oder auch kontinuierlich erfolgen kann. Bevorzugt ist die Homogenisierung nach Zugabe aller Komponenten der Rezeptur.

In einer Variante des erfindungsgemäßen Verfahrens wird ein Teil der Komponenten, beispielsweise diejenigen Komponenten, die nur in kleinen Mengen der Mischung zugesetzt werden, in einem zweiten Mischbehälter separat gemischt. Anschließend wird diese Mischung in den ersten Mischbehälter überführt.

In einer bevorzugten Variante wird das Verfahren über einen programmgesteuerten Rechner gesteuert, wobei zunächst eine Rezeptur aus einer Datenbank ausgewählt und die gewünschte Menge der herzustellenden Mischung eingegeben wird, dann der Rechner diesen Auftrag dem jeweiligen Mischbehälter zuweist, ihm Informationen über (mindestens) die jeweils einzufüllende Komponente und deren Menge sowie den Lagebehälter, in dem sich diese Komponente befindet, übermittelt, und schließlich der Rechner durch Ansteuern der Dosiervorrichtung des Vorratsbehältcrs den Dosiervorgang startet und nach Einfüllen der vorgegebenen Menge der Komponente in den jeweiligen Mischbehälter beendet. Die Steuerung der Bewegung der Mischbehälter erfolgt ebenfalls durch den Rechner. Dies kann über ferngesteuerte motorbetriebene Mischbehälter geschehen oder über eine entsprechende Anzeige an manuell bewegten Mischbehältern, die den Operator des jeweiligen Mischbehälters über den nächsten anzufahrenden Vorratsbehälter informiert. Bei letzterer Variante ist es vorteilhaft, auch an den Vorratsbehältern Anzeigen vorzusehen, die dem Operator des Mischbehälters signalisieren, dass der entsprechende Vorratsbehälter anzufahren ist.

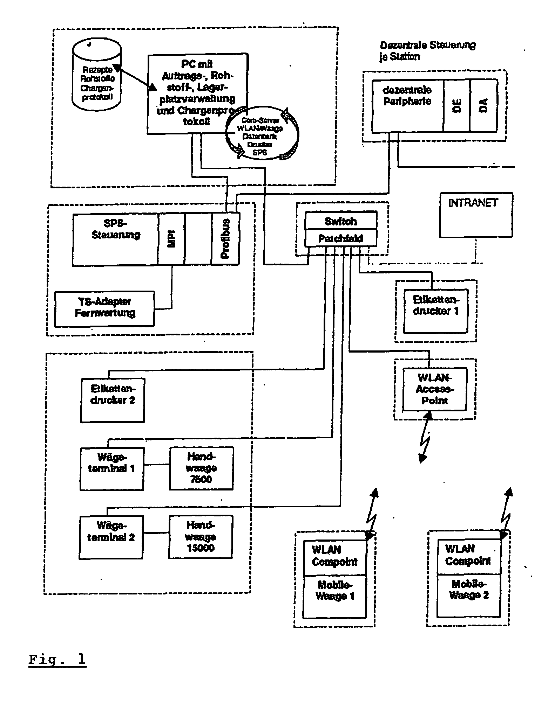

Im Folgenden wird beispielhaft eine Ausführungsform der Erfindung beschrieben, die in Fig. 1 schematisch dargestellt ist. Die Vorrichtung besteht aus verschiedenen semiautomatischen Dosierstationen (Module), Hand-Dosierstationen, mobilen Waagen (Wiegegleiter), Kommunikationsserver, Datenbank mit Rezepturverwaltung sowie Etikettendrucker (Barcode), Barcodescanner, und WLAN Access Points.

### Semiantomatische Dosierstation (Dosiermodule)

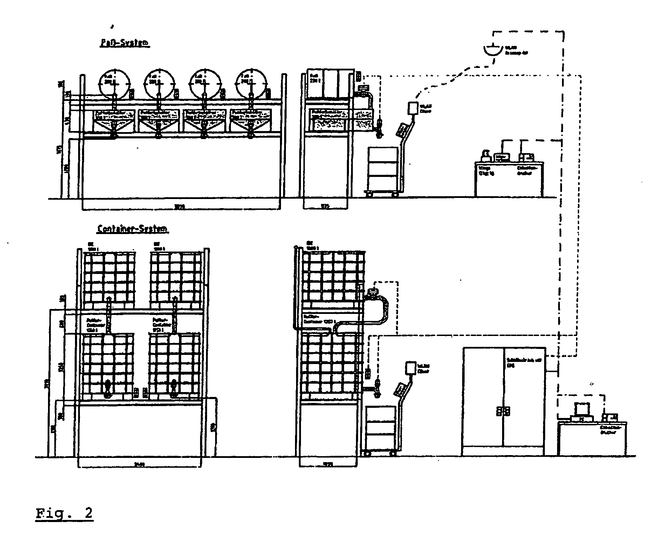

Alle Module haben im oberen Bereich eine Liefergebinde-Aufnahme und einen darunter angeordneten Pufferbehälter. Fig. 2 zeigt zwei mögliche Ausführungsformen des Moduls: als Fass-System und als Container-System. Der Pufferbehälter ist mit einer Nachfüllsteuerung, Überfüllsicherting, Gaspendelleitutig und elektro-pneumatischem 2 Stufen-Füllventil ausgestattet. Jedes Modul verfügt darüber hinaus über eine Leuchtenleiste (farblich den Wiegegleitern zugeordnet), Freigabetaster, Vorwahlschalter für manuellen oder automatischen. Betrieb und eine Ringabsaugung im Bereich des Füllventils. Als Arbeitsvorbereitung muss ein Liefergebinde (z.B. 200 L Fass oder 1000 L IBC) aufgelegt und mit der jeweiligen Modul-Nachfüllsteuerung verbunden werden. Dabei wird die Flüssigkeit gravimetrisch aus dem Liefergebinde in den Pufferbehälter überführt. Der Gasinhalt des Pufferbehälters wird gleichermaßen in das Liefergebinde zurückgeführt (geschlossenes System).

### Mobile Waagen (Wiegegleiter)

Diese Waagen besitzen ein Rahmengestell auf Rädern auf dem die Wiegeplattform montiert ist. Alle Waagen sind zudem mit einem Operator-Panel ausgestattet dass den Bediener durch die Rezepturabarbeitung führt. W-LAN Antennen und integrierte Kommunikationsbausteine gewährleisten den Datentransfer zwischen Waage und Kommunikationsserver. Ein Akku sorgt für die Stromversorgung. Jede Waage hat eine farbliche Kennzeichnung die einer der Leuchten an den Dosiermodulen entspricht.

### Hand-Dosierstationen

Kleinere Rezepturanteile können via Handdosierstationen und mobiler Waage dosiert, anschließend vermischt und als Gesamtmenge in das Haupt-Gebinde (Fass oder IBC) zugegeben werden. Damit keine Verwechslung stattfindet, wird das Batch wie auch das Hauptgebinde mit einem Barcode-Etikett versehen. Diese Etiketten werden vor der Zugabe mittels Scanner eingelesen und überprüft. Die Stationen bestehen aus Pufferbehälter und Wechselgebinde, Handdosierventil und diversen Armaturen. Sie besitzen ein Gaspendelsystem und eine Inertgasbeaufschlagung

### Kommunikations-Server und Datenbanken

Hier sitzt die Schaltzentrale der Einrichtung. Auf der Datenbank werden Rezepturen hinterlegt, aufgerufen und abgearbeitet. Dabei werden die Daten via Kommunikationsserver mit den verschiedenen Wiegegleitern ausgetauscht. In der Datenbank sind sämtliche Einstellwerte und Parameter für die Dosierung hinterlegt. Es werden die korrekten Einfüllmengen nach Rezepturvorgabe überwacht, Istwerte abgespeichert und entsprechende Schaltvorgänge (etwa Schließung der Dosierventile) via angeschlossene SPS ausgelöst.

### Sicherheitseinrichtungen

- Eine Überfüllung der Fässer wird durch eine Max-Gewichtseingabe an der Waage verhindert;
- Erfolgt eine Über/-Unterdosierung (außerhalb der hinterlegten Toleranz) einer Teilmenge, gibt der Rechner eine entsprechende Störmeldung aus;
- Falsche Produkte lassen sich aufgrund einer internen elektrischen Verriegelung nicht dosieren;
- Während der Kommunikation zwischen Server und Waage wird ein "Lebensbit" mit übertragen. Fällt dieses Bit aus (etwa durch einen leeren Waagenakku), dann schließt das Füllventil und die Anlage geht in den Störungsmodus;
- Wird während der Dosierung keine Gewichtszunahme an der Waage registriert, wird der Dosiervorgang abgebrochen.

Mit der Vorrichtung werden "halbautomatisch" verschiedene Polyol-Rezepturen in Gebinde formuliert. Dieser Prozess wird durch eine Rezeptur- und Dosierprogramm-Datenbank und einen Kommunikationsserver unterstützt. Die Gewichtserfassung erfolgt mittels mobiler Plattformwaagen (Wiegegleiter), die ständig via WLAN und Access-Points mit dem Rezepturprogramm und nachgeschalteten Datenbanken kommunizieren.

### Beispielhafte Abwicklung eines Auftrags:

Zunächst wird ein leeres Versandgebinde auf einem Wiegegleiter positioniert. Der Bediener ruft am Operator-Panel des Wiegegleiters einen Formulierauftrag ab. Als erstes wird zu diesem Auftrag ein Barcode generiert und gedruckt, der auf das leere Gebinde geklebt wird (spätere Identifizierung). Anschließend startet der Bediener die Abarbeitung des Auftrags. Das OP (Operator-Panel) gibt ihm den ersten Dosierplatz (z.B. Reihe 1 Platz 4) an. Der Bediener wird beim Auffinden des richtigen Dosierplatzes durch eine Leuchte (Dauerlicht) am entsprechenden Dosiermodul unterstützt. Die Farbe der Leuchte entspricht der Wiegegleiterfarbe. Nachdem das zu befüllende Gebinde mit seiner Einfüllöffnung exakt unter dem Füllventil platziert ist, erfolgt die halbautomatische Abfüllung einer Rohstoff-Teilmenge gemäß der hinterlegten Rezeptur. Dazu drückt der Operator zunächst den Taster am OP des Wiegegleiters und kurz darauf den Freigabe-Taster am entsprechenden Dosiermodul. Nachdem durch den Computer überprüft wurde, dass die richtige Waage am richtigen Dosierplatz steht, startet der Computer via SPS den Dosiervorgang und öffnet das Füllventil. Nach dem Erreichen des "Grobvorhaltes" wird das Füllventil in "Feinstrom" (kleinerer Querschnitt) geschaltet. Bei Erreichung des Sollgewichtes wird das Füllventil geschlossen und die Teildosierung ist beendet. Die Informationen über das jeweilige Gewicht erhält der Computer via WLAN von der Waage. Der Bediener kann sich nach dem "Start" der Dosierung um andere Formulierungen und Aufträge krümmern (Parallelabarbeitung), da die Schaltvorgänge automatisch abgearbeitet werden. Nach Beendigung des Füllvorgangs blinkt die Leuchte am Dosiermodul und signalisiert dem Bediener, dass nun die nächste Komponente eingefüllt werden kann. Der Bediener quittiert nun an der Bedieneinheit (OP) am Wiegegleiter die erfolgte Dosierung und bekommt danach die nächste Komponente angezeigt. Parallel erfolgt das Aufleuchten der entsprechenden Leuchte am nächsten Dosiermodul. Dieser Vorgang wird mit verschiedenen Rohstoffen wiederholt, bis die hinterlegte Rezeptur "abgearbeitet" ist. Das Ende der Rezeptur wird dem Bediener durch eine Fertigmeldung am OP angezeigt.

Nach Beendigung der halbautomatischen Dosierung kann ggf. die Handwgabe von kleineren Mengen (Additive) in das Gebinde erfolgen.

Komponenten mit einem kleineren Gewichtsanteil werden in einem Masterbatch-Verfahren an den Handdosiermodulen gesondert gefertigt und am Schluss dem Hauptgebinde zugegeben. Der Grund dafür ist, dass hierbei Waagen mit höherer Auflösung benötigt werden. Der Ablauf ist dem vorher beschriebenen Dosierablauf allerdings sehr ähnlich. Die Rezepturabarbeitung wird ebenfalls durch den Computer und WLAN-geführte Waagen unterstützt. Die Dosierung der einzelnen Komponenten erfolgt allerdings rein manuell. Am Ende wird das "Masterbatch" vorgemischt. Bevor die Zugabe in das Hauptgebinde erfolgt, wird der Barcode des "Masterbatches" mit dem des Hauptgebindes mittels Scanner verglichen. Stimmen diese überein, erfolgt die Zugabe. Am Ende wird das Hauptgebinde homogenisiert und zur Prüfung freigegeben.

## Patentansprüche

1. Vorrichtung zur Herstellung von Mischungen von Flüssigkeiten und/oder Feststoffen umfassend
(1) mehrere stationäre Lagerbehälter mit steuerbaren Dosiervorrichtungen,
(2) mehrere Mischbehälter, und
(3) Mittel zur Steuerung der Mischbehälter und der Dosiervorrichtungen der stationären Lagerbehälter"
**dadurch gekennzeichnet, dass** die Mischbehälter Versandgebinde auf beweglichen Untersätzen sind die unabhängig voneinander zwischen den stationären Lagerbehältern beweglich sind.

2. Vorrichtung gemäß Anspruch 1, wobei die Lagerbehälter mit elektromechanisch oder pneumatisch schaltbaren Dosierventilen, die elektronisch gesteuert werden, ausgestattet sind.

3. Vorrichtung gemäß Anspruch 1 oder 2, wobei dic Lagerbehälter Mittel zur Auslösung des Dosiervorgangs aufweisen.

4. Verfahren zur Herstellung von Mischungen, bei dem mehrere unabhängig voneinander bewegliche Mischbehälter eingesetzt werden, wobei die einzelnen Mischbehälter gemäß der Vorgabe durch eine Rezeptur zu einem von mehreren stationären Lagerbehältern für die Komponenten der jeweiligen Rezeptur bewegt werden die in der Rezeptur festgelegte Menge der jeweiligen Komponente in den jeweiligen Mischbehälter dosiert wird, der jeweilige Mischbehälter anschließend zum Lagerbehälter für dic nächste durch die Rezeptur vorgegebene Komponente bewegt wird, wo die in der Rezeptur festgelegte Menge der Komponente in den jeweiligen Mischbehälter zudosiert wird, und wobei dies so lange durchgeführt wird, bis alle in der Rezeptur aufgeführten Komponenten in den jeweiligen Mischbehälter dosiert sind, und wobei die Mischbehälter Versandgebinde auf beweglichen Untersätzen sind.

## Claims

1. Device for producing mixtures of liquids and/or solids, comprising
(1) a plurality of stationary storage containers having controllable metering devices,
(2) a plurality of mixing containers, and
(3) means for controlling the mixing containers and the metering devices of the stationary storage containers,
**characterized in that** the mixing containers are shipping drums on movable bases which are movable independently of one another between the stationary storage containers.

2. Device according to Claim 1, the storage containers being equipped with electromechanically or pneumatically switchable metering valves which are controlled electronically.

3. Device according to Claim 1 or 2, the storage containers having means for triggering the metering operation.

4. Method for producing mixtures, in which a plurality of mixing containers movable independently of one another are used, the individual mixing containers being moved, as stipulated by a recipe, to one of a plurality of stationary storage containers for the components of the respective recipe, the quantity, defined in the recipe, of the respective component being metered into the respective mixing container, the respective mixing container subsequently being moved to the storage container for the next component stipulated by the recipe, where the quantity, defined in the recipe, of the component is metered into the respective mixing container, this being carried out until all the components listed in the recipe are metered into the respective mixing container, and the mixing containers being shipping drums on movable bases.

## Revendications

1. Dispositif pour la préparation de mélanges de liquides et/ou de solides, comprenant
(1) plusieurs réservoirs de stockage fixes à dispositifs doseurs commandables,
(2) plusieurs récipients de mélange, et
(3) des moyens pour la commande des récipients de mélange et des dispositifs doseurs des réservoirs de stockage fixes,
**caractérisé en ce que** les récipients de mélange sont des fûts d'expédition sur supports mobiles, qui peuvent être déplacés indépendamment les uns des autres entre les réservoirs fixes.

2. Dispositif selon la revendication 1, dans lequel les réservoirs de stockage sont munis de vannes de dosage à actionnement électromécanique ou pneumatique, qui sont commandées électroniquement.

3. Dispositif selon la revendication 1 ou 2, dans lequel les réservoirs de stockage comportent des moyens pour le déclenchement du processus de dosage.

4. Procédé pour la préparation de mélanges, dans lequel on utilise plusieurs récipients de mélange mobiles indépendamment les uns des autres, dans lequel les récipients de mélange individuels sont amenés selon la prescription donnée par une formulation vers l'un de plusieurs réservoirs de stockage fixes pour les composants de la formulation respective, la quantité du composant respectif stipulée dans la formulation est transférée de façon dosée dans le récipient de mélange respectif, le récipient de mélange respectif est ensuite amené au réservoir de stockage pour le composant suivant préétabli par la formulation, où la quantité du composant stipulée dans la formulation est transférée de façon dosée dans le récipient de mélange respectif, et procédé dans lequel cela est effectué jusqu'à ce que tous les composants indiqués dans la formulation soient transférés de façon dosée dans le récipient de mélange respectif, et procédé dans lequel les récipients de mélange sont des fûts d'expédition sur supports mobiles.
